# EUROPEAN PATENT SPECIFICATION

(11) **EP 2 990 219 B1**
(45) Date of publication and mention of the grant of the patent: **27.06.2018**
(21) Application number: 14788876.2
(22) Date of filing: 11.04.2014
(51) Int. Cl.: B60C 5/01, B60C 11/01, B60C 9/18, B60C 9/28, B60C 11/00, B60C 9/22

(54) **TIRE**
REIFEN
PNEU

(30) Priority: 22.04.2013 JP 2013089469
(43) Date of publication of application: 02.03.2016
(73) Proprietor: Bridgestone Corporation, Tokyo 104-8340 (JP)
(72) Inventor: HASEGAWA, Keiichi, Tokyo 104-8340 (JP); KON, Seiji, Tokyo 104-8340 (JP); KOUNO, Yoshihide, Tokyo 104-8340 (JP)
(74) Representative: Oxley, Robin John George
(86) International application number: PCT/JP2014/060548
(87) International publication number: WO 2014/175084

(56) References cited:
- EP-A1- 2 399 761
- EP-A1- 2 960 077
- WO-A1-2010/095688
- WO-A1-2014/171462
- JP-A- H06 297 914
- JP-A- 2005 262 977
- JP-A- 2009 090 870
- JP-A- 2010 095 061
- JP-A- 2011 042 236
- US-A- 4 088 168

## Description

### Technical Field

The present invention relates to a tire in which a tire frame member is formed using a resin material.

### Background Art

Hitherto, tires are known that are formed from rubber, organic fiber material, and steel members. Recently, there is demand for tire frame members to be made from thermoplastic polymers, such as thermoplastic elastomers (TPE) and thermoplastic resins in order to achieve weight reductions and easy recycling. For example, Japanese Patent Application Laid-Open (JP-A) No. 3-143701 describes forming a tire frame member in which a bead core is covered in a thermoplastic elastomer, disposing a reinforcing layer on the outer circumference of the tire frame member, further disposing a tread member on the outer circumference thereof, and performing vulcanization bonding. Attention is drawn to the disclosures of EP2987650 and EP2960077, which form part of the state of the art under Article 54(3) EPC, and to the disclosure of EP2399761, on which the preamble of claim 1 is based.

### SUMMARY OF INVENTION

### Technical Problem

In a tire axial direction cross-section of an ordinary tire, a reinforcing layer and the tread face of the tread have curvatures that curve about different centers on the tire radial direction inside, so as to protrude toward the tire radial direction outside. Accordingly, the tread and the reinforcing layer deform so that their curvatures decrease and they flatten out when the tread contacts the ground (under load from the road surface). The deformation of the reinforcing layer leads to an increase in the rolling resistance.

In the conventional example given above, in tire axial direction cross-section, the outer circumferential surface of the crown portion of the tire frame member is formed so as to be flat along the tire axial direction, and a reinforcing layer is disposed along this outer circumferential surface. Thus, a suppression of deformation of the reinforcing layer under load is conceivable compared to ordinary tires.

However, in the example given above, the tread face of the tread has a curvature similar to that of an ordinary tire, and the tread face of the tread deforms so as to flatten along the road surface under load. In addition, the end portions of the reinforcing layer in the tire axial direction extend as far as shoulder portions of the tire frame member. It is accordingly conceivably difficult to suppress deformation of the edge portions of the reinforcing layer under load.

In consideration of the above circumstances, an object of the present invention is to reduce rolling resistance.

### Solution to Problem

A tire according to the present invention is provided as claimed in claim 1.

In this tire, the reinforcing layer is provided to the tire frame member along the outer surface of the flat crown portion, and the end portions at the tire axial direction outside of the reinforcing layer are positioned further to the tire axial direction inside than the tire axial direction outside end portions of the flat crown portion. This thereby enables deformation of the reinforcing layer under load to be suppressed more than in cases in which the end portions of the reinforcing layer extend in the tire axial direction up to the shoulder portions of the tire frame member. This thereby enables rolling resistance to be reduced.

In this tire, the end regions at the outer surface of the tread are positioned further to the tire radial direction inside than the extension line of the central region, thereby enabling ground contact of the end regions, where the reinforcing layer is not present in the layer below, to be suppressed. This thereby enables uneven wear resistance performance to be improved at the end regions of the tread.

Preferably, in the tire axial direction cross-section, the end regions are formed so as to be circular arc-shaped having a center of curvature on a tire outside.

In this tire, the end regions are formed so as to be circular arc-shaped having a center of curvature on the tire outside, enabling ground contact of the end regions to be further suppressed. This thereby enables uneven wear resistance performance to be improved even more at the end regions of the tread.

### [DELETED]

In this tire, due to the outer surface of the flat crown portion where the reinforcing layer is disposed being flat, both rolling resistance and uneven wear resistance performance can be achieved at the end regions by making D/TW fall within the above range. Advantageous Effects of Invention

As explained above, the tire according to the present invention is able to obtain the excellent advantageous effect of being able to reduce rolling resistance.

### BRIEF DESCRIPTION OF DRAWINGS

Fig. 1 is a cross-section illustrating a tire sectioned along the tire axial direction. Hatching is omitted.
Fig. 2 is an enlarged cross-section illustrating a tire sectioned along the tire axial direction.

### DESCRIPTION OF EMBODIMENTS

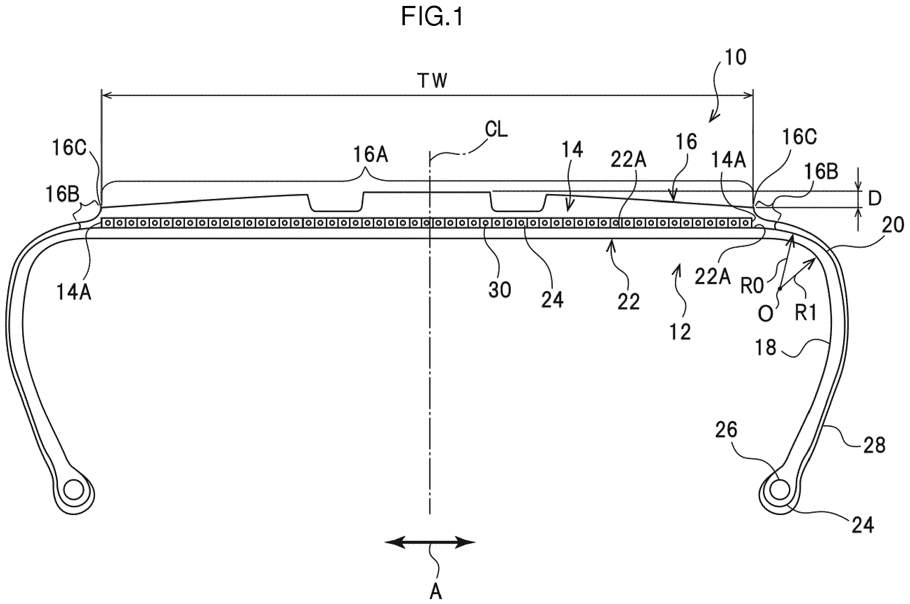

Explanation follows regarding embodiments to implement the present invention, with reference to the drawings. In Fig. 1, a tire 10 according to the present exemplary embodiment includes a tire frame member 12, a reinforcing layer 14, and a tread 16.

The tire frame member 12 is configured from a resin material. The tire frame member 12 is provided with side portions 18, shoulder portions 20, and a flat crown portion 22.

The side portions 18 are respectively positioned at both sides of a tire axial direction (arrow A direction) sides, and are connected to a pair of bead portions 24 at a tire radial direction outside. An annular shaped bead core 26 is embedded in each of the bead portions 24. The bead cores 26 are configured by winding a bead cord plural times in an annular shape, or by forming a cable cord formed from plural twisted strands into an annular-shape.

A bead cord may employ a steel cord configured by twisting together plural steel filaments. The outer surfaces of the filaments may be plated, such as by zinc plating, copper plating, or brass plating. A cord made from another metal may be employed as the bead cord.

The shoulder portions 20 are connected to a tire radial direction outside end portions of the side portions 18, and, in a tire axial direction cross-section, curve so as to protrude toward a tire outside. The center of curvature O of the shoulder portions 20 is positioned at the inside of the tire frame member 12 in the tire axial direction cross-section. In the present exemplary embodiment, the center of curvature O of the shoulder portions 20 means the center of curvature of the inner surface at the shoulder portions 20. In cases in which the outline profile of the inner surface of each of the shoulder portions 20 is configured from plural curved lines, the center of curvature O of the shoulder portion 20 means the center of curvature of the circular arc having the smallest radius of curvature.

The radius of curvature RI of the inner surface of the shoulder portions 20 is, for example, from 4.5 mm to 30 mm. The radius of curvature RO of the outer surface of the shoulder portions 20 is, for example, from 7 mm to 32.5 mm. The center of curvature of the outer surface may be aligned with the center of curvature O of the inner face, or may be different therefrom.

The radius of curvature of the inner surface of the side portions 18 (not illustrated in the drawings) is 1 to 20 times the radius of curvature RI of the inner surface of the shoulder portions 20. The degree of curvature (curvature) of the side portions 18 is accordingly smaller than that of an ordinary tire.

The flat crown portion 22 is connected to the shoulder portions 20. The outer surface 22A of the flat crown portion 22 is formed along a tire axial direction in the tire axial direction cross-section, and is connected to the outer surfaces of the shoulder portions 20. In other words, the outer surface 22A of the flat crown portion 22 is tangent to the outer surfaces of the shoulder portions 20. The meaning of flat is not limited to completely flat profiles. The outer surface 22A of the flat crown portion 22 may have a slightly undulating shape, as long as the undulations can be ignored in terms of their effects on deformation of the reinforcing layer 14 under load. When warping and shrinking of the resin material during molding of the tire frame member is considered, the tolerance between the highest value and the lowest value of the thickness of the flat crown portion is 1 mm or less. It is preferably 0.5 mm or less.

The tire frame member 12 is circular-shaped centered on the tire axis. Examples of the resin material configuring the tire frame member 12 include thermoplastic resins (including thermoplastic elastomers), thermoset resins, and other general-purpose resins, and also engineering plastics (including super engineering plastics). These resin materials do not include vulcanized rubber.

Thermoplastic resins (including thermoplastic elastomers) are polymer compounds of materials that soften and flow with increasing temperature, and that adopt a relatively hard and strong state when cooled. In the present specification, out of these, distinction is made between polymer compounds of materials that soften and flow with increasing temperature, that adopt a relatively hard and strong state on cooling, and that have a rubber-like elasticity, considered to be thermoplastic elastomers, and polymer compounds of materials that soften and flow with increasing temperature, that adopt a relatively hard and strong state on cooling, and do not have a rubber-like elasticity, considered to be non-elastomer thermoplastic resins.

Examples of thermoplastic resins (thermoplastic elastomers included) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

As the thermoplastic materials described above, for example, materials may be employed with a deflection temperature under load (at loading of 0.45 MPa), as defined by ISO 75-2 or ASTM D648, of 78°C or greater, a tensile yield strength, as defined by JIS K7113, of 10 MPa or greater, a tensile elongation at break (JIS K7113), also as defined by JIS K7113, of 50% or greater, and a Vicat softening temperature, as defined in JIS K7206 (method A), of 130°C.

Thermoset resins are polymer compounds that cure to form a 3 dimensional mesh structure with increasing temperature. Examples of thermoset resins include phenolic resins, epoxy resins, melamine resins, and urea resins.

In addition to the thermoplastic resins (including thermoplastic elastomers) and thermoset resins already listed above, general purpose resins may also be employed as the resin material, such as (meth)acrylic-based resins, EVA resins, vinyl chloride resins, fluororesins, and silicone-based resins.

Next, the reinforcing layer 14 is provided along the outer surface 22A of the flat crown portion 22, and the end portions 14A at a tire axial direction outside of the reinforcing layer 14 are positioned further to a tire axial direction inside than a tire axial direction outside end portions of the flat crown portion 22. In other words, the tire axial direction outside end portions 14A of the reinforcing layer 14 are positioned further to the tire axial direction inside than the center of curvature O of the shoulder portions 20. The reinforcing layer 14 is configured by winding a cord 30, which is covered with a cord covering layer 34 and formed using a resin material, onto the outer surface 22A of the flat crown portion 22 along the tire circumferential direction so as to form a spiral shape. The reinforcing layer 14 corresponds to a belt layer disposed at the tire radial direction outside of a carcass ply in a conventional rubber-made pneumatic tire. The tire axial direction outside indicates a direction away from a tire equatorial plane CL, and the tire axial direction inside indicates a direction approaching the tire equatorial plane CL.

The resin material employed in the cord covering layer 34 may be the same type of resin material as that configuring the tire frame member 12, or may be a different type. Employing, as the resin material, the same type of resin material to that configuring the tire frame member 12, enables excellent bonding to be performed to the tire frame member 12.

The outer surfaces of the bead portions 24 and the side portions 18 are covered by a covering layer 28. A rubber may, for example, be employed as the covering layer 28.

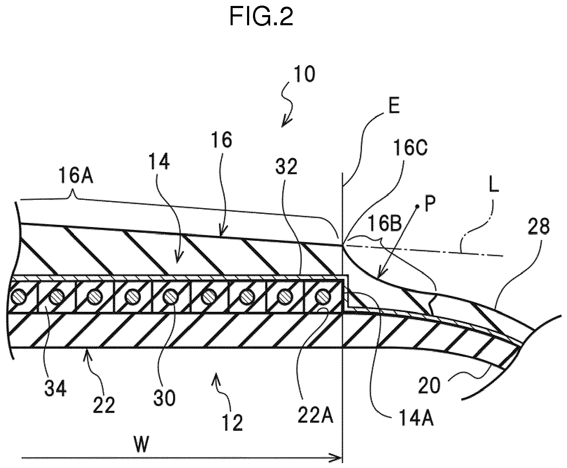

As illustrated in Fig. 1 and Fig. 2, the tread 16 is provided at the tire radial direction outside of the flat crown portion 22 and the reinforcing layer 14. The tread 16 is, for example, a pre-cured tread (PCT) formed using rubber. The tread 16 is formed from a rubber having superior abrasion resistance to that of the resin material forming the tire frame member 12. The same types of tread rubber as those employed in conventional rubber-made pneumatic tires may be employed as the rubber, for example, styrene-butadiene rubber (SBR). The tread 16 may be configured by employing another type of resin material having superior abrasion resistance characteristics to the resin material forming the tire frame member 12.

In tire axial direction cross-section, an outer surface of the tread 16 includes a central region 16A, and end regions 16B. The central region 16A is provided at the tire axial direction inside from the position (line E) of the end portions 14A of the reinforcing layer 14, and is formed so as to be circular arc-shaped protruding toward the tire radial direction outside. Origin points 16C of the end regions 16B (boundaries between the central region 16A and the end regions 16B) are set so as to be positioned between the position of the tire axial direction outside end portions 14A of the reinforcing layer 14, up to 2% of a tire axial direction width W of the reinforcing layer 14 to the tire axial direction outside thereof. The width W of the reinforcing layer 14 is a distance in the tire axial direction between end portions of the cord covering layer 34. In the reinforcing layer 14, in cases in which the cord 30 is not covered by the cord covering layer 34, the width W of the reinforcing layer 14 is the distance in tire axial direction between the outside surfaces of the cord 30 positioned furthest to the outside.

In tire axial direction cross-section, the end regions 16B at the outer surface of the tread 16 are connected to the tire axial direction outside of the central region 16A, as illustrated in Fig. 2, and are formed further to the tire radial direction inside than the extension line L of the central region 16A. For example, the end regions 16B are formed in tire axial direction cross-section so as to be circular arc-shaped having a center of curvature P on the tire outside. The shape of the end regions 16B is not limited thereto, and the end regions 16B where the reinforcing layer 14 is not disposed may be any shape that is a shape capable of suppressing ground contact under load.

As illustrated in Fig. 2, a cushion rubber 32 is disposed between the tread 16 and the reinforcing layer 14, and between the tread 16 and the tire frame member 12, respectively. The cushion rubber 32 is a non-vulcanized or semi-vulcanized rubber employed for bonding.

In Fig. 1, if TW denotes a width of the tread 16, and D denotes a fall amount of a tire radial direction height difference between the outer surface of the tread 16 at the tire equatorial plane CL, and at the origin points 16C of the end regions 16B (a boundary between the central region 16A and the end regions 16B), then D/TW = 0.03 to 0.05. Outside of this numerical range, it is difficult to achieve both a reduction in rolling resistance and uneven wear resistance performance in the end regions 16B of the tread 16. The outer surface means the tread face. The tire equatorial plane CL is positioned in the central region 16A, and so the outer surface of the tread 16 at the tire equatorial plane CL means the tread face of the central region 16A.

### Operation

Explanation follows regarding operation of the present exemplary embodiment, configured as described above. In Fig. 1 and Fig. 2, in the tire 10 of the present exemplary embodiment, the outer surface 22A of the flat crown portion 22 of the tire frame member 12 is formed so as to be flat along the tire axial direction. The reinforcing layer 14 is provided along the outer surface 22A of the flat crown portion 22, and the tire axial direction outside end portions 14A of the reinforcing layer 14 are positioned further to the tire axial direction inside than the tire axial direction outside end portions of the flat crown portion 22.

This thereby enables deformation of the reinforcing layer 14 under load in the tire axial direction to be suppressed more than in cases in which the end portions 14A of the reinforcing layer 14 extends up to the vicinity of the shoulder portions 20 of the tire frame member 12. This thereby enables the rolling resistance to be reduced.

The end regions 16B at the outer surface of the tread 16 are positioned further to the tire radial direction inside than the extension line L of the central region 16A, enabling ground contact of the end regions 16B, where the reinforcing layer 14 is not present in the layer below, to be suppressed. This thereby enables the uneven wear resistance performance to be raised at the end regions 16B of the tread 16.

Moreover, the end regions 16B are formed so as to be circular arc-shaped with a center of curvature P on the tire outside of the tread 16, thereby enabling ground contact of the end regions 16B to be further suppressed. This thereby enables the uneven wear resistance performance to be raised even more at the end regions 16B of the tread 16.

Due to the outer surface 22A of the flat crown portion 22 where the reinforcing layer 14 is disposed being flat, both rolling resistance and uneven wear resistance performance can be achieved at the end regions 16B of the tread 16 by making D/TW from 0.03 to 0.05.

### Explanation of the Reference Numerals

- 10: tire
- 12: tire frame member
- 14: reinforcing layer
- 14A: end portion
- 16: tread
- 16A: central region
- 16B: end region
- 16C: origin point of end region (boundary between central region and end region)
- 18: side portion
- 20: shoulder portion
- 22: flat crown portion
- 22A: outer surface
- D: fall amount
- L: extension line
- P: center of curvature
- TW: width of central region

## Claims

1. A tire (10) comprising:
a tire frame member (12) that is made from a resin material and is provided with side portions (18) positioned at each tire axial direction side, shoulder portions (20) that are connected to tire radial direction outside end portions of the side portions (18) and that are curved so as to protrude toward a tire outside in a tire axial direction cross-section, and a flat crown portion (22) connected to the shoulder portions (20);
a reinforcing layer (14) that is provided along an outer surface (22A) of the flat crown portion (22), and that has tire axial direction outside end portions (14A) that are positioned further toward a tire axial direction inside than tire axial direction outside end portions of the flat crown portion (22); and
a tread (16) that is provided at a tire radial direction outside of the flat crown portion (22) and the reinforcing layer (14), **characterised in that** in the tire axial direction cross-section, an outer surface of the tread (16) includes a central region (16A) provided from a position of the tire axial direction outside end portions (14A) of the reinforcing layer (14) toward the tire axial direction inside so as to be circular arc-shaped protruding toward the tire radial direction outside, and end regions (16B) that are each directly connected to a tire axial direction outside of the central region (16A) and that are formed further to the tire radial direction inside than an extension line (L) of the central region (16A), and
wherein D/TW = 0.03 to 0.05, wherein TW is a width of the tread (16), and D is a fall amount of a tire radial direction height difference between the outer surface of the tread (16) at a tire equatorial plane (CL), and at a boundary (16C) between the central region (16A) and the end regions (16B).

2. The tire of claim 1, wherein, in the tire axial direction cross-section, the end regions (16B) are formed so as to be circular arc-shaped having a center of curvature (P) on a tire outside.

## Patentansprüche

1. Reifen (10), umfassend:
ein Reifenrahmenglied (12), welches aus einem Harzmaterial besteht und Seitenabschnitte (18) aufweist, welche an jeder Reifenaxialrichtungsseite angeordnet sind, Schulterabschnitte (20), welche in der Reifenradialrichtung mit Außenendabschnitten der Seitenabschnitten (18) verbunden sind, und welche so gekrümmt sind, dass sie in der Richtung der Außenseite des Reifens in einem Querschnitt in der Reifenaxialrichtung vorstehen, und einen flachen Kronenabschnitt (22), welcher mit den Schulterabschnitten (20) verbunden ist;
eine Verstärkungsschicht (14), welche entlang einer Außenfläche (22A) des flachen Kronenabschnitts (22) bereitgestellt ist, und welche Außenendabschnitte (14A) in der Reifenaxialrichtung aufweist, welche weiter in einer Reifenaxialrichtung zu Innenendabschnitten hin angeordnet sind als zu Außenendabschnitten in einer Reifenaxialrichtung des flachen Kronenabschnitts (22); und
eine Lauffläche (16), welche auf einer Außenseite in der Reifenradialrichtung außerhalb des flachen Kronenabschnitts (22) und der Verstärkungsschicht (14) bereitgestellt ist,
**dadurch gekennzeichnet, dass**
im Querschnitt in der Reifenaxialrichtung, eine Außenfläche der Lauffläche (16) einen zentralen Bereich (16A) umfasst, welcher sich von einer Position der Außenendabschnitte (14A) in der Reifenaxialrichtung der Verstärkungsschicht (14) zur Innenseite hin, in der Reifenaxialrichtung erstreckt, um eine kreisförmige gebogene Form aufzuweisen, welche zur Außenseite hin in der Reifenradialrichtung vorsteht, und Endbereiche (16B) welche jeweils direkt mit einer Außenseite in der Reifenaxialrichtung des zentralen Bereichs (16A) verbunden sind und zur Innenseite in der Reifenradialrichtung weiter hin gebildet sind als eine Erstreckungslinie (L) des zentralen Bereichs (16A), und
wobei D/TW = 0,03 bis 0,05, wobei TW eine Breite der Lauffläche (16) ist, und D ein Fallwert einer Höhendifferenz in der Reifenradialrichtung zwischen der Außenfläche der Lauffläche (16) an einer Reifenäquatorialebene (CL) und an einer Begrenzung (16C), zwischen dem zentralen Bereich (16A) und den Endbereichen (16B) ist.

2. Reifen nach Anspruch 1, wobei, im Querschnitt in der Reifenaxialrichtung, die Endbereiche (16B) so geformt sind, dass sie eine kreisförmig gebogene Form aufweisen, dessen Krümmungsmittelpunkt (P) auf einer Reifenaußenseite liegt.

## Revendications

1. Bandage pneumatique (10), comprenant :
un élément de cadre du bandage pneumatique (12) composé d'un matériau de résine et comportant des parties latérales (18) positionnées au niveau de chaque côté dans la direction axiale du bandage pneumatique, des parties d'épaulement (20) connectées à des parties d'extrémité externes, dans la direction radiale du bandage pneumatique, des parties latérales (18), et courbées de sorte à déborder vers un côté externe du bandage pneumatique, dans une section transversale dans la direction axiale du bandage pneumatique, et une partie de sommet plate (22) connectée aux parties d'épaulement (20) ;
une couche de renforcement (14) agencée le long d'une surface externe (22A) de la partie de sommet plate (22), et comportant des parties d'extrémité externes (14A), dans la direction axiale du bandage pneumatique, qui sont positionnées davantage vers des parties d'extrémité internes, dans une direction axiale du bandage pneumatique, que vers des parties d'extrémité externes, dans la direction axiale du bandage pneumatique, de la partie de sommet plate (22) ; et
une bande de roulement (16) agencée au niveau d'un côté externe, dans la direction radiale du bandage pneumatique, de la partie de sommet plate (22) et de la couche de renforcement (14) ;
**caractérisé en ce que** :
dans la section transversale dans la direction axiale du bandage pneumatique, une surface externe de la bande de roulement (16) inclut une région centrale (16A) s'étendant d'une position des parties d'extrémité externes (14A), dans la direction axiale de la couche de renforcement (14), vers un côté interne, dans la direction axiale du bandage pneumatique, de sorte à avoir une forme circulaire en arc, débordant vers le côté externe, dans la direction radiale du bandage pneumatique, et des régions d'extrémité (16B), connectées chacune directement à un côté externe, dans la direction axiale du bandage pneumatique, de la région centrale (16A) et agencées davantage vers l'intérieur, dans la direction radiale du bandage pneumatique, qu'une ligne d'extension (L) de la région centrale (16A) ; et
dans lequel D/TW est compris entre 0,03 et 0,05, TW représentant une largeur de la bande de roulement (16) et D représentant une quantité de réduction d'une différence de hauteur, dans la direction radiale du bandage pneumatique, entre la surface externe de la bande de roulement (16), au niveau du plan équatorial du bandage pneumatique (CL), et une limite (16C) entre la région centrale (16A) et les régions d'extrémité (16B).

2. Bandage pneumatique selon la revendication 1, dans lequel, dans la section transversale dans la direction axiale du bandage pneumatique, les régions d'extrémité (16B) sont formées de sorte à avoir une forme circulaire en arc, comportant un centre de courbure (P) sur un côté externe du bandage pneumatique.
